# EUROPÄISCHE PATENTSCHRIFT

(11) **EP 2 877 365 B1**
(45) Veröffentlichungstag und Bekanntmachung des Hinweises auf die Patenterteilung: **12.07.2023**
(21) Anmeldenummer: 13742161.6
(22) Anmeldetag: 25.07.2013
(51) Int. Cl.: B25J 11/00, B25J 13/08, B60L 53/14, B60L 53/16, B60L 53/35, B60L 53/37, H01R 43/26

(54) **LADESYSTEM UND VERFAHREN ZUM ELEKTRISCHEN AUFLADEN EINES KRAFTFAHRZEUGS**
CHARGING SYSTEM AND METHOD FOR ELECTRICALLY CHARGING A MOTOR VEHICLE
SYSTÈME DE RECHARGE ET PROCÉDÉ DE RECHARGE ÉLECTRIQUE D'UN VÉHICULE AUTOMOBILE

(30) Priorität: 27.07.2012 DE 102012014936
(43) Veröffentlichungstag der Anmeldung: 03.06.2015
(73) Patentinhaber: KUKA Deutschland GmbH, 86165 Augsburg (DE)
(72) Erfinder: SETTELE, Norbert, 86574 Willprechtszell (DE)
(74) Vertreter: Schlotter, Alexander Carolus Paul
(86) Internationale Anmeldenummer: PCT/EP2013/002215
(87) Internationale Veröffentlichungsnummer: WO 2014/015991

(56) Entgegenhaltungen:
- US-A- 6 157 162
- US-A1- 2010 241 299
- US-A1- 2013 076 902
- US-B1- 7 999 506

## Beschreibung

Die vorliegende Erfindung betrifft ein Ladesystem und ein Verfahren zum elektrischen Aufladen eines Kraftfahrzeugs, insbesondere eines Personenkraftwagens, sowie ein Computerprogrammprodukt zur Durchführung eines solchen Verfahrens.

Aus der DE 10 2009 006 982 A1 ist ein Ladesystem und ein Verfahren zum Laden einer Energiequelle eines Transportmittels mit einer, insbesondere in drei Achsen beweglichen, Robotereinheit bekannt, die eine Ladevorrichtung automatisch an eine Schnittstelle der Energiequelle anschließt. Dabei kann eine Kupplung zur Energieversorgung beim Steckvorgang leichtes Schrägstehen um die Hochachse ausgleichen und/oder gegen Verdrehungen unempfindlich sein.

Ein solcher passiver Toleranzausgleich kann, insbesondere unter Berücksichtigung der in der Praxis teilweise großen Positionsabweichungen beim Abstellen eines Kraftfahrzeugs an dem Ladesystem einerseits und der Empfindlichkeit elektrischer Steckverbindungen andererseits zu einem erhöhten Verschleiß der Steckverbindung führen.

Die US 7 999 506 B1 betrifft ein System bestehend aus einem Robotermanipulator mit einer Kamera und einer Verarbeitungseinheit, wobei das System die Kamera- und Bildverarbeitung verwendet, um die Position eines Plug-in-Hybrid-Elektrofahrzeugs und folglich den Ort der Ladebuchse des Fahrzeugs zu identifizieren und der Robotermanipulator dann den Stecker des Ladekabels in die Buchse des Fahrzeugs führt und den Stecker aus dem Fahrzeug zieht, sobald der Ladevorgang abgeschlossen ist.

Nach der US 6 157 162 A wird, wenn ein Zuführkoppler von einem Empfangskoppler gedrückt wird, der Zuführkoppler durch ein erstes Eingriffselement eines Befestigungsmechanismus gelöst, um entlang eines Elektrofahrzeugs verschiebbar zu sein, und auch durch ein zweites Eingriffselement des Befestigungsmechanismus gelöst, um in Bezug auf einen Verschiebemechanismus winkelbeweglich sein, wobei der Zuführmechanismus dann mit dem Empfangskoppler in Eingriff geht und beginnt, die Batterie des Elektrofahrzeugs zu laden.

Die US 2013/076902 A1 betrifft eine Roboterladestation zum Aufladen einer Batterie eines Elektrofahrzeugs, die eine Basisplatte, ein Standrohr, das mit der Basisplatte gekoppelt ist und sich im Wesentlichen quer zu der Basisplatte erstreckt, und einen Roboterarm umfasst, der sich vom Standrohr aus erstreckt und einen Endeffektor trägt, welcher mehrere elektrische Kontakte enthält, die zur Kopplung mit einer Steckdose, die am Elektrofahrzeug angeordnet ist, ausgestaltet sind, wobei der Roboterarm ausgestaltet ist, um das Greiforgan mit drei Bewegungsfreiheitsgraden zu bewegen.

Aufgabe der vorliegenden Erfindung ist es, das Aufladen eines Elektrokraftfahrzeugs, insbesondere eines Personenkraftwagens, mit einem elektrischen Energiespeicher zur Versorgung eines Fahrantriebs, zu verbessern.

Diese Aufgabe wird durch ein Ladesystem mit den Merkmalen des Anspruchs 1 gelöst. Anspruch 8 stellt ein Verfahren zum elektrischen Aufladen eines Kraftfahrzeugs mittels eines solchen Ladesystems unter Schutz, Anspruch 13 ein Computerprogrammprodukt, insbesondere einen Datenträger bzw. ein Speichermedium, zur Durchführung eines solchen Verfahrens. Die Unteransprüche betreffen vorteilhafte Weiterbildungen.

Ein Ladesystem zum Aufladen eines Elektrokraftfahrzeugs, insbesondere eines Personenkraftwagens, mit einem elektrischen Energiespeicher zur Versorgung eines Fahrantriebs weist einen Roboter und ein Steuermittel zum Steuern dieses Roboters auf, wobei zur kompakteren Darstellung Steuern im Sinne der vorliegenden Erfindung verallgemeinernd auch ein Regeln, d.h. die Ausgabe von Stellgrößen auf Basis rückgeführter Ist-Größen, umfassen kann. Entsprechend kann das Steuermittel in einer Ausführung ein oder mehrere Regler aufweisen, insbesondere wenigstens einen Kraftregler bzw. eine Kraftregelung, wie nachfolgend erläutert.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern kann.

Der Roboter kann in einer Ausführung eine oder mehrere, insbesondere wenigstens sechs oder sieben Achsen aufweisen. Ein sechsachsiger Roboter kann vorteilhaft - im Rahmen seiner konstruktiven Randbedingungen - beliebige Lagen und Orientierungen seines Endeffektors darstellen und so insbesondere schwer zugängliche und/oder unterschiedliche Endlagen an- und/oder Bahnen mit vorgegebener Orientierung abfahren. Ein redundanter, sieben- oder mehrachsiger Roboter kann vorteilhaft singuläre Posen auflösen bzw. vermeiden und sich zudem noch besser an unterschiedliche Umgebungsbedingungen, insbesondere Hindernisse im Arbeitsraum, anpassen. In einer Ausführung ist der Roboter ein Knickarmroboter mit einem oder mehr, insbesondere wenigstens sechs, Drehgelenken, wobei in einer Weiterbildung eine auf eine Basis- bzw. Grundachse folgende zweite Achse zu dieser senkrecht orientiert, eine auf eine zweite Achse folgende dritte Achse zu dieser parallel und/oder eine dritte, vierte und/oder fünfte Achse senkrecht zu einer vorhergehenden Achse orientiert sein kann. Diese Konfiguration hat sich für den vorliegenden Anwendungsfall als besonders vorteilhaft herausgestellt. Der Roboter kann stationär, insbesondere an einem Boden, einer Wand oder einer Decke, befestigt oder mobil sein, insbesondere rad- oder schienengestützt verfahren.

An dem Roboter ist ein Stecker lös- bzw. wechselbar oder dauerhaft befestigt, der dazu eingerichtet ist, mit einem fahrzeugseitigen Gegenstecker eine lösbare Steckverbindung zum Aufladen eines elektrischen Energiespeichers des Kraftfahrzeugs herzustellen. In einer Ausführung kann die elektrische Steckverbindung eine Steckverbindung gemäß SAE J1772-2009, VDE-AR-E 2623-2-2 oder IEC 62196-3 und/oder Typ 1, Typ 2 oder Typ 3 und/oder eine Combo-Steckverbindung, insbesondere eine kombinierte Gleich- und Wechselstrom-Steckverbindung, oder eine hierzu kompatible Steckverbindung sein. In einer Weiterbildung weist das Ladesystem verschiedene Stecker zum lösbaren Verbinden mit unterschiedlichen Gegensteckern auf. Verschiedene Stecker können in einer Weiterbildung zusammen an dem Roboter befestigt und von diesem wahlweise, insbesondere durch Umorientieren einer Roboterhand, eingesetzt werden. Zusätzlich oder alternativ kann das Ladesystem auch einen Steckerspeicher aufweisen, aus dem der Roboter wahlweise verschiedene Stecker entnehmen und führen kann. Unter einem Stecker und einem Gegenstecker im Sinne der vorliegenden Erfindung werden insbesondere die beiden Partner einer Steckverbindung bezeichnet, die form- und/oder reibschlüssig ineinander gesteckt die elektrische Steckverbindung bilden. Insbesondere kann ein als Stecker ("male connector") ausgebildeter robotergeführter Stecker in den als Buchse ("female connector") ausgebildeten fahrzeugseitigen Gegenstecker eingeführt werden.

Der Roboter weist ein Krafterfassungsmittel auf, mit dem das Steuermittel kommuniziert. Zur kompakteren Darstellung kann eine Kraft im Sinne der vorliegenden Erfindung verallgemeinernd auch mehrere Kräfte, insbesondere antiparallele Kräftepaare, d.h. Drehmomente, bezeichnen bzw. aufweisen. Entsprechend kann das Krafterfassungsmittel insbesondere ein mehrachsiges Krafterfassungsmittel zur Erfassung von Kräften in ein, zwei oder drei, insbesondere kartesischen bzw. linearen, Achsen, und/oder von Drehmomenten um eine, zwei oder drei Drehachsen sein. Durch ein mehrachsiges Krafterfassungsmittel können vorteilhaft insbesondere Schubkräfte in einer Ebene senkrecht zu einer Steck- bzw. Verbindungsrichtung der Steckverbindung, Zug- und/oder Druckkräfte in der Steckrichtung, Torsionsmomente um die Steckrichtung und/oder Kippmomente um ein oder zwei Achsen senkrecht zu der Steckrichtung erfasst werden.

In einer Ausführung weist das Krafterfassungsmittel einen, insbesondere mehr-, vorzugsweise sechsachsigen, Kraft- und/oder Momentensensor auf. Dieser kann in einer Weiterbildung zwischen dem robotergeführten Stecker und dem Roboter bzw. eine Flansch des Roboters, angeordnet sein, um Reaktionskräfte zu erfassen, die auf den Stecker einwirken. Ein solcher Kraft- und/oder Momentensensor kann mit dem Steuermittel drahtlos oder drahtgebunden kommunizieren.

Zusätzlich oder alternativ kann das Krafterfassungsmittel ein oder mehrere Kraftsensoren an Achsen, insbesondere Gelenken und/oder Antrieben, insbesondere Getrieben, des Roboters aufweisen, insbesondere Momentensensoren an Drehgelenkantriebsmotoren und/oder -getrieben. Hierdurch können ebenfalls, insbesondere modellgestützt, Reaktionskräfte erfasst werden, die auf den Stecker einwirken. Hierdurch kann insbesondere auf einen separaten Kraft- und/oder Momentensensor am Flansch des Roboters verzichtet werden.

Um nicht mit einer Tanköffnung in einer Karosserie eines aufzuladenden Kraftfahrzeugs zu interferieren, kann ein, insbesondere wenigstens im Wesentlichen zylinderförmiger, Kraft- und/oder Momentensensor einen Durchmesser aufweisen, der geringer ist als eine solche Tanköffnung. Gleichermaßen kann zwischen Stecker und Kraft- und/oder Momentensensor eine Verlängerung, insbesondere eine Abstandshülse, angeordnet sein, um ein Einführen des Steckers in die Tanköffnung zu erleichtern.

Nach einem Aspekt der vorliegenden Erfindung steuert das Steuermittel den Roboter derart, dass dieser den robotergeführten Stecker mit dem Gegenstecker verbindet, bzw. ist hierzu, insbesondere programmtechnisch, eingerichtet. Dabei wird der Roboter auf Basis der von dem Krafterfassungsmittel ermittelten Kraft gesteuert, insbesondere kraftgeregelt. Die Kraftregelung kann in einer oder mehreren Achsen des Roboters und/oder in einer oder mehreren Raumachsen erfolgen. Insbesondere kann der Roboter in einer oder mehreren kartesischen und/oder Drehachsen des Arbeitsraumes kraftgeregelt gesteuert werden, vorzugsweise in Steck- bzw. Verbindungsrichtung der elektrischen Steckverbindung bzw. des robotergeführten Steckers und/oder senkrecht hierzu und/oder um eine oder mehrere zur Steckrichtung senkrechte Drehachsen. Die Kraftregelung kann alternativ zu einer Positionsregelung in den entsprechenden Achsen bzw. Richtungen erfolgen oder dieser überlagert sein.

So kann in einer Ausführung in der Steckrichtung, d.h. einer kartesischen Raumachse, positionsgeregelt eine Steckbewegung kommandiert werden. Dieser Positionsregelung kann eine Kraftregelung überlagert sein. Insbesondere kann eine Steckbewegung abgebrochen oder modifiziert werden, wenn eine von dem Krafterfassungsmittel erfasste Kraft, die auf den Stecker wirkt, einen, insbesondere vorgebbaren, Grenzwert übersteigt. In einer oder mehreren Richtungen bzw. einer Ebene senkrecht zu der Steckbewegung oder -richtung kann der Stecker kraftgeregelt ausweichen und so einen Versatz bzw. eine Toleranz in diesen Richtungen kompensieren. Zusätzlich oder alternativ kann der Stecker kraftgeregelt um eine oder mehrere Drehachsen ausweichen, insbesondere um eine oder mehrere Achsen senkrecht zur Steckrichtung kippen, und so einen Orientierungsversatz bzw. eine Orientierungstoleranz kompensieren. Einer solchen Kraftregelung senkrecht zur Steckrichtung kann eine Positionsregelung unterlagert sein, um eine Grund- bzw. Anfangsorientierung und/oder -positionierung des Steckers darzustellen.

Durch das Ermitteln einer Kraft, die beim bzw. durch das Verbinden des robotergeführten Steckers mit dem fahrzeugseitigen Gegenstecker auf diesen wirkt, und das Steuern des Roboters zum Verbinden des robotergeführten Steckers mit dem Gegenstecker auf Basis dieser von dem Krafterfassungsmittel ermittelten Kraft, insbesondere ein in einer oder mehreren Achsen kraftgeregeltes Verbinden, kann vorteilhaft die Belastung der elektrischen Steckverbindung reduziert und so insbesondere deren Zuverlässigkeit und/oder Lebensdauer erhöht werden.

Eine Kraftregelung kann insbesondere derart ausgebildet sein, dass der Roboter bzw. der robotergeführte Stecker einer Kraft, die beim Verbinden des Steckers mit dem Gegenstecker auf diesen wirkt, ausweicht. Das Steuermittel kann also den Roboter insbesondere derart steuern, dass er den Stecker, insbesondere in einer Ebene senkrecht zur Steck- bzw. Verbindungsrichtung, in Richtung einer auf ihn wirkenden Kraft versetzt. Ein Sollwert einer Kraftregelung kann, insbesondere im Wesentlichen, gleich Null sein, d.h. das Regelziel ein, wenigstens im Wesentlichen, störkraftfreies Stecken bzw. Verbinden.

Ein kraftgeregeltes Kompensieren von Lage- und/oder Orientierungsabweichungen zwischen robotergeführtem Stecker und fahrzeugseitigem Gegenstecker, wie es nach einem Aspekt der vorliegenden Erfindung vorgeschlagen wird, ist besonders zur Kompensation kleinerer Abweichungen geeignet.

Daher wird gemäß einer Ausführung der vorliegenden Erfindung vorgeschlagen, den Roboter bzw. den robotergeführten Stecker vor dem eigentlichen Stecken bzw. Verbinden vorzupositionieren. Um dabei Abweichungen in Lage und/oder Orientierung zwischen einer theoretischen bzw. Soll-Position des Gegensteckers und dessen tatsächlichen bzw. Ist-Position, die sich insbesondere beim Anfahren des Ladesystems und dem Abstellen des Kraftfahrzeugs ergeben können, auszugleichen, wird zunächst eine Ist-Position, d.h. Lage und/oder Orientierung, des Gegensteckers ermittelt. Das Ladesystem weist hierzu in einer Ausführung ein Positionserfassungsmittel auf. Dieses kann in einer Weiterbildung ein Bildaufnahme- und -verarbeitungsmittel, insbesondere eine Kamera, vorzugsweise eine CCD-Kamera, und eine Mustererkennung aufweisen, die dazu eingerichtet ist, in einem Kamerabild den Gegenstecker zu identifizieren. Das Steuermittel kann dann den robotergeführten Stecker, wenigstens im Wesentlichen, fluchtend mit der erfassten Ist-Position des Gegensteckers vorpositionieren. Zusätzlich oder alternativ kann das Positionserfassungsmittel auch ein Abstandserfassungsmittel zur Bestimmung eines Abstandes zu dem Kraftfahrzeug, insbesondere dem fahrzeugseitigen Gegenstecker, aufweisen. Das Steuermittel kann dann den robotergeführten Stecker in einem vorgegebenen Abstand zu dem Gegenstecker vorpositionieren. Anschließend kann das robotergeführte Stecken des Steckers auf Basis einer auf ihn wirkenden, durch das Krafterfassungsmittel ermittelten Kraft erfolgen.

Das Positionserfassungsmittel kann robotergeführt und hierzu dauerhaft oder lös- bzw. wechselbar an dem Roboter befestigt sein. In einer Ausführung kann der Roboter zunächst das Positionserfassungsmittel führen und die Position des Gegensteckers ermitteln, und anschließend das Positionserfassungsmittel gegen den Stecker tauschen, um diesen mit dem Gegenstecker zu verbinden. In einer anderen Ausführung können das Positionserfassungsmittel und der Stecker gleichzeitig an dem Roboter befestigt sein bzw. der Roboter Positionserfassungsmittel und Stecker gleichzeitig führen, um diesen Wechselaufwand zu vermeiden. Dabei kann das Positionserfassungsmittel dazu eingerichtet sein, einen Bereich in Steckrichtung vor dem Stecker zu erfassen. Auf diese Weise kann der Roboter den Stecker auf Basis des Positionserfassungsmittels vorpositionieren und anschließend direkt, ohne Posenänderung, mit dem Gegenstecker verbinden, und/oder den Steck- bzw. Verbindungsvorgang und/oder die Steckverbindung überwachen. Gleichermaßen kann das Positionserfassungsmittel dazu eingerichtet sein, einen anderen Bereich, d.h. einen Bereich, der nicht in Steckrichtung vor dem Stecker liegt, insbesondere einen Bereich zu erfassen, der neben einem Bereich liegt, der in Steckrichtung vor dem Stecker liegt. Dies kann insbesondere günstig sein, um die Gefahr einer Beschädigung oder Interferenz des Positionserfassungsmittels beim Stecken zu reduzieren. Der Roboter kann dann zunächst das Positionserfassungsmittel auf den Gegenstecker ausrichten, dessen Position ermitteln, und anschließend unter Umpositionierung, insbesondere einer Roboterhand, den robotergeführten Stecker vorpositionieren. Gleichermaßen kann das Positionserfassungsmittels jedoch auch unabhängig von dem Roboter, insbesondere stationär oder eigenbeweglich, angeordnet sein.

Zusätzlich oder alternativ zu einem Positionserfassungsmittel kann der Roboter einen Greifer zum Öffnen und/oder Schließen eines Tankdeckels einer Tanköffnung aufweisen, um vor dem Verbinden von Stecker und Gegenstecker den den Gegenstecker abdeckenden Tankdeckel zu öffnen und/oder nach dem Lösen bzw. Trennen von Stecker und Gegenstecker den Tankdeckel zu schließen. Der Greifer kann insbesondere ein Magnet- und/oder Vakuumgreifer sein und in einer Weiterbildung, insbesondere durch Umorientieren einer Roboterhand, anstelle des robotergeführten Steckers vor dem Gegenstecker bzw. dem den Gegenstecker abdeckenden Tankdeckel positioniert werden. Hierzu kann das Positionserfassungsmittel dazu eingerichtet sein, die Position des Tankdeckels zu erfassen. Zusätzlich oder alternativ kann der Tankdeckel von einem Fahrer entriegelt und/oder geöffnet werden.

In einer Ausführung kann der Kraftsensor die Kraft außer beim Verbinden auch beim Lösen und/oder während dem Aufladen bzw. bei geschlossener Steckverbindung ermitteln und diese von dem Kraftsensor ermittelte Kraft gespeichert und/oder, insbesondere während und/oder nach dem Aufladen bzw. on- und/oder offline, ausgewertet werden. Ein entsprechendes Speicher- und/oder Auswertemittel kann mit dem Steuermittel kommunizieren oder in dieses integriert sein, insbesondere als entsprechende Verabreitungseinheit und/oder als entsprechendes Programm oder Programmmodul.

Hierdurch kann in einer Weiterbildung der Verbindungsvorgang überwacht und/oder bewertet werden, insbesondere, ob eine ausreichende Steckkraft erreicht und so eine gewünschte Stecksicherheit erreicht worden ist oder nicht. Zusätzlich oder alternativ zu einer solchen Bewertung der Steckverbindung kann durch Speichern und/oder Auswerten insbesondere mehrerer Verbindungsvorgänge eine Veränderung, insbesondere ein Verschleiß, von Stecker und/oder Gegenstecker, erkannt werden, beispielsweise, wenn sich die erfasste Kraft bei verschiedenen Verbindungsvorgängen ändert, insbesondere vergrößert oder -ringert. Entsprechend kann beispielsweise die Steckverbindung angepasst werden, zum Beispiel durch Erhöhen oder Reduzieren von Soll-Kräften der Kraftregelung.

Zusätzlich oder alternativ kann das Speicher- und/oder Auswertemittel dazu eingerichtet sein, eine elektrische Kenngröße, insbesondere einen elektrischen Widerstand, der Steckverbindung zu ermitteln, zu speichern und/oder zu bewerten. In einer Ausführung kann, insbesondere durch das hierzu eingerichtete Speicher- und/oder Auswertemittel, ein Verschleiß der Steckverbindung, insbesondere auf Basis der beim Verbinden, beim Lösen und/oder während dem Aufladen bzw. bei geschlossener Steckverbindung ermittelten, gespeicherten und/oder ausgewerteten Kraft und/oder elektrischen Kenngröße, insbesondere während und/oder nach dem Aufladen bzw. on- und/oder offline, ermittelt und in einer Weiterbildung dem Fahrer angezeigt werden. In einer Weiterbildung kann, insbesondere durch das hierzu eingerichtete Speicher- und/oder Auswertemittel, aus diesem Verschleiß der Steckverbindung eine Restlebensdauer, insbesondere eine Anzahl noch möglicher Steckzyklen abgeschätzt und/oder ausgegeben, insbesondere angezeigt werden.

Zusätzlich oder alternativ kann, insbesondere durch das hierzu eingerichtete Speicher- und/oder Auswertemittel, ein Auflade- bzw. Tankvorgang bewertet werden. So kann beispielsweise eine Zeit, in der die Steckverbindung geschlossen ist, und/oder eine elektrische Kenngröße gespeichert und zur Ermittlung einer Aufladegröße, insbesondere einer abgegebenen bzw. aufgenommenen Energiemenge, weiterverarbeitet werden. Zusätzlich oder alternativ kann, insbesondere durch das hierzu eingerichtete Speicher- und/oder Auswertemittel, der Gegenstecker und/oder das aufzuladende Kraftfahrzeug identifiziert werden, beispielsweise, um ein Aufladen zu autorisieren, zuzuordnen und/oder aufzuzeichnen.

Zusätzlich oder alternativ kann durch Speichern und/oder Auswerten der erfassten Kraft eine Soll-Bahn des Roboters bzw. robotergeführten Steckers angepasst werden bzw. das Steuermittel oder das Speicher- und/oder Auswertemittel eine Soll-Bahn auf Basis einer gespeicherten und/oder ausgewerteten Kraft anpassen, insbesondere verändern. So kann insbesondere eine Soll-Bahn zukünftiger Verbindungsvorgänge, d.h. eine Verbindungsbahn, auf Basis vorangegangener Verbindungsvorgänge adaptiert werden, beispielsweise durch eine adaptive Bahnplanung und/oder lernende Steuerung, insbesondere ein neuronales Netz. Zusätzlich oder alternativ kann eine Soll-Bahn zum Lösen der Verbindung bzw. zum Heraus- bzw. Abziehen des robotergeführten Steckers, d.h. einer Lösebahn, vom fahrzeugseitigen Gegenstecker auf Basis des vorangegangenen Verbindungsvorganges bzw. einer dabei ermittelten Kraft adaptiert werden, beispielsweise durch eine lernende Steuerung, insbesondere ein neuronales Netz. Ist beispielsweise beim Stecken der Roboter kraftgeregelt in eine Richtung ausgewichen, kann diese Abweichung bei der Planung der Soll-Bahn zum Abziehen des Steckers berücksichtigt bzw. nachgefahren werden. Weicht beispielsweise die kraftgeregelt erreichte Ladeposition des robotergeführten Steckers, in der dieser mit dem Gegenstecker verbunden ist, stets in einer bestimmten Richtung von der Vorpositionierung auf Basis des Positionserfassungsmittels ab, kann diese Vorpositionierung bzw. die Ladesollposition entsprechend angepasst werden.

Insbesondere bei einer Fehlbedingung kann es während des Aufladevorgangs, d.h. bei geschlossener Steckverbindung, zu einer Relativbewegung des Kraftfahrzeugs gegenüber dem Roboter kommen. Insbesondere kleinere Relativbewegungen kann der Roboter kraftgeregelt kompensieren, indem er die Ladeposition bzw. die Position des robotergeführten Steckers beim Aufladen bzw. geschlossener elektrischer Steckverbindung auf Basis einer Auswertung der während des Ladevorgangs erfassten Kraft anpasst. Allgemein kann daher in einer Ausführung der vorliegenden Erfindung die Kraft beim Verbinden und/oder Lösen der Steckverbindung und/oder während des Ladevorgangs bzw. bei geschlossener Steckverbindung erfasst, gespeichert und/oder ausgewertet werden. Zusätzlich oder alternativ kann, insbesondere, um auf größere Relativbewegungen zu reagieren, eine Rutschkupplung zwischen dem Stecker und dem Roboter angeordnet sein, insbesondere zwischen dem Stecker und einem Kraft- und/oder Momentensensor oder zwischen einem Kraft- und/oder Momentensensor und dem Roboter bzw. einem Roboterflansch. Unter einer Rutschkupplung wird vorliegend eine Verbindung verstanden, die bei Überschreiten einer vorgebbaren Kraft öffnet. Die Rutschkupplung kann passiv ausgebildet sein, beispielsweise Permanentmagnete oder federbelastete Riegel aufweisen, die bei Überschreiten ihrer Anziehungs- bzw. Vorspannkraft öffnen. Gleichermaßen kann die Rutschkupplung aktiv ausgebildet sein, beispielsweise Elektromagnete oder elektrisch aktuierte Riegel aufweisen, die das Steuermittel auf Basis einer von dem Krafterfassungsmittel erfassten Kraft öffnen kann, insbesondere, wenn diese eine vorgebbare Kraft übersteigt

In einer Ausführung wird ein Aufladen des Energiespeichers in Abhängigkeit von einer Freigabe durch das Steuermittel durchgeführt. Insbesondere kann in einer Weiterbildung vorgesehen sein, dass der Stecker nur mit Energie zum Aufladen des Energiespeichers beaufschlagt wird, falls bzw. solange die Steckverbindung geschlossen ist und/oder das Krafterfassungsmittel erfasst, dass eine Kraft in Steckrichtung einen vorgebbaren Wert übersteigt und/oder eine Kraft in einer anderen Richtung, insbesondere senkrecht hierzu, unterhalb eines vorgebbaren Wertes liegt. Auf diese Weise kann sichergestellt werden, dass bei einer Scherkraft, die während des Ladevorgangs auf die Steckverbindung wirkt und diese zu lösen sucht, der Stecker nicht bestromt wird bzw. nur bestromt wird, solange der Stecker ausreichend stark gegen den Gegenstecker drückt. Das Steuermittel kann die Freigabe zusätzlich oder alternativ auch von anderen Bedingungen abhängig machen, beispielsweise einer visuellen Überwachung durch das Positionserfassungsmittel, dem Verharren, insbesondere Stillstehen, des Roboters in einer vorgegebenen Ladepose oder einem Sicherheitsbereich um diese oder dergleichen.

Weitere Vorteile und Merkmale ergeben sich aus den Unteransprüchen und den Ausführungsbeispielen. Hierzu zeigt, teilweise schematisiert:
Fig. 1: ein Ladesystem nach einer Ausführung der vorliegenden Erfindung; und
Fig. 2: ein Verfahren nach einer Ausführung der vorliegenden Erfindung.

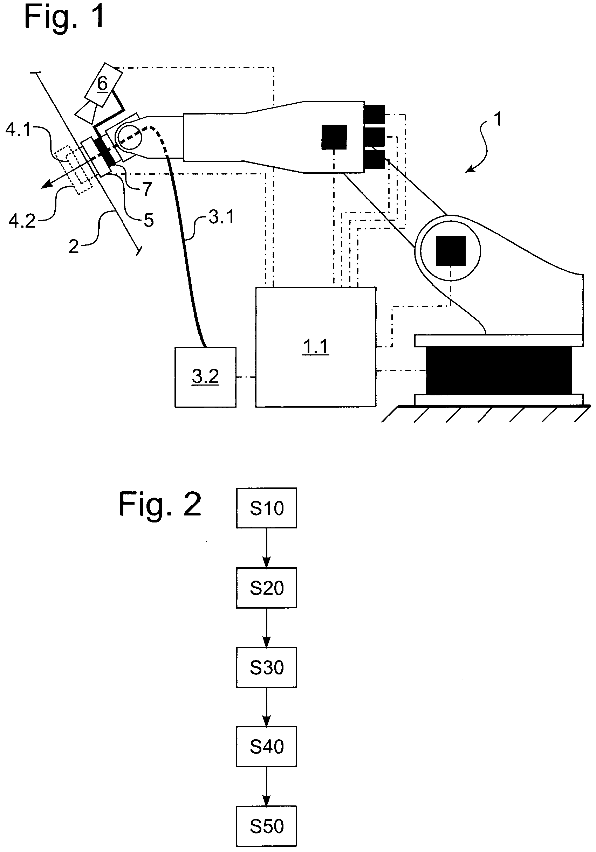

Fig. 1 zeigt ein Ladesystem für einen Personenkraftwagen 2 mit einem elektrischen Energiespeicher zur Energieversorgung eines elektrischen Fahrzeugantriebs, der einen buchsenartigen Gegenstecker 4.2 aufweist, welcher in einer Tanköffnung in der Karosserie des Personenkraftwagens versenkt angeordnet ist, die in Fig. 1 ausschnittsweise angedeutet ist.

Das Ladesystem weist einen stationären oder in einer nicht dargestellten Abwandlung mobilen Roboter 1 mit einem Steuermittel 1.1 in Form eines Steuerschranks mit darin ablaufenden Programmen auf. Der Roboter ist als sechsachsiger Knickarmroboter mit vertikaler Grundachse, hierzu senkrechter zweiter und dritter Drehachse einer Schwinge gegenüber einem Karussell bzw. einer Roboterhand gegenüber der Schwinge, sowie einer vierten, fünften und sechsten Achse der Roboterhand ausgebildet, die jeweils senkrecht zu der vorhergehenden Achse orientiert sind und einander in einem Punkt schneiden.

Am Roboterflansch ist eine Rutschkupplung 7 angeordnet, die aktiv oder passiv bei Überschreiten einer vorgebbaren Scherkraft auslöst. In einer nicht dargestellten Abwandlung kann die Rutschkupplung entfallen.

An der Rutschkupplung bzw. dem Roboterflansch ist ein sechsachsiger Kraft-Momenten-Sensor 5 zur Erfassung von Kräften in einer Steckrichtung, die in Fig. 1 durch einen Bewegungspfeil angedeutet ist, orthogonalen Kräften senkrecht hierzu sowie Drehmomenten um zu den Kräften parallele Drehachsen angeordnet und mit der Robotersteuerung 1.1 signalverbunden, was in Fig. 1 durch strichpunktierte Linien angedeutet ist.

An dem Kraft-Momenten-Sensor ist ein Stecker 4.1, beispielsweise ein Combo-Stecker Typ 2, befestigt, der mit dem Gegenstecker 4.2 zu einer lösbaren elektrischen Steckverbindung zum Aufladen des Energiespeichers des Kraftfahrzeugs verbunden ist und hierzu über ein Energieversorgungskabel 3.1 mit einer Energiequelle 3.2 energieverbunden ist, die mit der Steuerung 1.1 kommuniziert. Die Steuerung 1.1 gestattet der Energiequelle 3.2, den Stecker 4.1 zu bestromen, solange der Roboter 1 sich innerhalb eines vorgegebenen Toleranzbereichs um die in Fig. 1 dargestellte Ladepose befindet, der Kraft-Momenten-Sensor keine Scherkräfte senkrecht zur Steckrichtung erfasst, die einen vorgegebenen Grenzwert übersteigen, und der Kraft-Momenten-Sensor in Steckrichtung eine ausreichend große Anpresskraft erfasst. Auf diese Weise ist der Stecker 4.1 bei Nicht-Betankung und geöffneter bzw. sich öffnender Steckverbindung stromlos.

Am Roboterflansch ist eine CCD-Kamera 6 befestigt, die einen Bereich in Steckrichtung vor dem Stecker 4.1 erfasst und mit der Steuerung 1.1 signalverbunden ist.

Fig. 2 veranschaulicht den Ablauf eines Verfahrens nach einer Ausführung der vorliegenden Erfindung, wie es insbesondere von der mit Bezug auf Fig. 1 erläuterten Ladestation durchgeführt werden kann.

In einem Schritt S10 positioniert der durch die Steuerung 1.1 gesteuerte Roboter 1 die CCD-Kamera 6 im Bereich der Tanköffnung, nachdem das Fahrzeug 2 eingefahren und abgestellt und die Tanköffnung geöffnet ist. Die Steuerung 1.1 wertet das Kamerabild aus und ermittelt so die Position des Gegensteckers 4.2.

In einem Schritt S20 positioniert der durch die Steuerung 1.1 gesteuerte Roboter 1 den Stecker 4.1 auf Basis der solcherart ermittelten Position des Gegensteckers mit diesem fluchtend und von diesem beabstandet vor. Die Steuerung kann der Roboter dabei positionsgeregelt steuern.

In einem Schritt S30 steckt der durch die Steuerung 1.1 gesteuerte Roboter 1 den Stecker 4.1 kraftgeregelt in den Gegenstecker 4.2 ein. Dabei erfasst der Kraft-Momenten-Sensor 5 die auf den Stecker 4.1 wirkenden Kräfte in Steckrichtung und senkrecht hierzu. In Steckrichtung verlagert der durch die Steuerung 1.1 gesteuerte Roboter 1 den Stecker 4.1 positionsgeregelt, wobei eine Kraftregelung überlagert ist, die bei Erreichen einer vorgegebenen Steckkraft die Bewegung in Steckrichtung beendet. In einer Ebene bzw. zwei orthognalen Richtungen senkrecht zur Steckrichtung wird der Roboter 1 bzw. der robotergeführte Stecker 4.1 derart kraftgeregelt, dass der Stecker 4.1 einer Reaktionskraft, die bei einem versetzten bzw. nicht ausreichend fluchtenden Kontakt zwischen Stecker 4.1 und Gegenstecker 4.2 auf den Stecker 4.1 wirkt, ausweicht und so fluchtend mit dem Gegenstecker ausgerichtet wird. Gleiches gilt für Drehmomente um zwei oder drei orthogonale Achsen, von denen eine insbesondere parallel oder senkrecht zur Steckrichtung orientiert sein kann: so kann die Steuerung 1.1 den robotergeführten Stecker 4.1 beispielsweise aufgrund der Reaktionskräfte um eine zur Zeichenebene der Fig. 1 senkrechte Achse verdrehen, bis seine Orientierung mit der des Gegensteckers 4.2 ausreichend übereinstimmt.

In einem Schritt S40 gibt die Steuerung 1.1 ein Aufladen des Energiespeichers des Fahrzeugs die Energiequelle 3.2 frei bzw. kommandiert diese, den Stecker 4.1 zu bestromen. Während des Aufladens werden von dem Kraftsensor 5 ermittelte Kräfte durch die Steuerung 1.1, die ein Steuer-, Speicher- und Auswertemittel im Sinne der vorliegenden Erfindung bildet, gespeichert und ausgewertet.

Insbesondere kann der Verlauf einer Kraft in Steckrichtung und/oder senkrecht hierzu gespeichert und mit vorhergehenden verglichen werden, um beispielsweise einen Verschleiß der Steckverbindung zu bewerten. Zusätzlich oder alternativ kann die Freigabe des Bestromens davon abhängen, dass während des Aufladens eine ausreichende Kraft in Steckrichtung auf den Stecker 4.1 wirkt, um die elektrische Steckverbindung sicher zu schließen, und keine zu hohen Kräfte senkrecht zu dieser Steckrichtung auf den Stecker 4.1 wirken, die die Steckverbindung zu trennen suchen, beispielsweise durch ein ungewolltes Losrollen des Fahrzeugs 2.

Zusätzlich oder alternativ kann die Ladeposition des robotergeführten Steckers 4.1 während des Aufladens angepasst werden, beispielsweise, indem der Roboter 1 kraftgeregelt die Ladeposition bzw. die mit dem Gegenstecker 4.2 verbundene Position an Kräfte senkrecht zur Steckrichtung anpasst und diese so abbaut.

Zusätzlich oder alternativ kann in Schritt S40 eine Verbindungssollbahn angepasst werden. Erreicht beispielsweise die Kraft in Steckrichtung, ausgehend von der Vorpositionierung, bei einem bestimmten Vorschub in Steckrichtung einen vorgegebenen Grenzwert, kann dieser Vorschub, gegebenenfalls zuzüglich eines vorgegebenen Aufschlags, als Soll-Vorschub für den nächsten Verbindungs- bzw. Steckvorgang vorgegeben und die Verbindungssollbahn so optimiert werden. Zusätzlich oder alternativ kann eine Lösebahn, auf der der Roboter 1 den robotergeführten Stecker 4.1 vom Gegenstecker 4.2 abzieht, wenn das Aufladen beendet ist, auf Basis der beim Verbinden und/oder beim Aufladen erfassten Kräfte angepasst werden. Musste beispielsweise der Roboter beim Verbinden kraftgeregelt in eine Richtung ausweichen, kann die Soll-Lösebahn entsprechend in dieser Richtung geändert werden.

Ist das Aufladen beendet, löst der durch die Steuerung 1.1 gesteuerte Roboter 1 in einem Schritt S50 die Steckverbindung und zieht den Stecker 4.1 auf der, gegebenenfalls angepassten, Lösebahn von dem Gegenstecker 4.2 ab.

In einer nicht dargestellten Weiterbildung kann der Roboter 1 an seinem Flansch einen Greifer, insbesondere einen Magnet- oder Vakuumgreifer, aufweisen, um vor Schritt S10 einen Tankdeckel der Tanköffnung zu öffnen und/oder nach Schritt S50 zu schließen.

### Bezugszeichenliste

- 1: Roboter
- 1.1: (Roboter)Steuerung (Steuer-, Speicher- und Auswertemittel)
- 2: Fahrzeug(karosserie)
- 3.1: Energieleitung
- 3.2: Energiequelle
- 4.1: Stecker
- 4.2: Gegenstecker
- 5: Kraft-Momenten-Sensor (Krafterfassungsmittel)
- 6: CCD-Kamera (Positionserfassungsmittel)
- 7: Rutschkupplung

## Patentansprüche

1. Ladesystem zum elektrischen Aufladen eines Kraftfahrzeugs, insbesondere eines Personenkraftwagens (2), mit einem Roboter (1) mit einem Steuermittel (1.1), einem Krafterfassungsmittel (5) und einem an dem Roboter befestigten Stecker (4.1), der dazu eingerichtet ist, mit einem fahrzeugseitigen Gegenstecker (4.2) eine lösbare Steckverbindung zum Aufladen eines elektrischen Energiespeichers des Kraftfahrzeugs herzustellen,
wobei das Steuermittel dazu eingerichtet ist, mit dem Krafterfassungsmittel zu kommunizieren und den robotergeführten Stecker auf Basis einer von dem Krafterfassungsmittel ermittelten Kraft mit dem Gegenstecker zu verbinden, **dadurch gekennzeichnet, dass** die ermittelte Kraft eine auf den Stecker wirkende Kraft ist und das Krafterfassungsmittel dazu eingerichtet ist, auch beim Lösen der Steckverbindung eine Kraft zu ermitteln.

2. Ladesystem nach Anspruch 1, **gekennzeichnet durch** ein, insbesondere robotergeführtes, Positionserfassungsmittel (6) zum Ermitteln einer Position des Gegensteckers, wobei das Steuermittel dazu eingerichtet ist, mit dem Positionserfassungsmittel zu kommunizieren und den robotergeführten Stecker auf Basis einer von dem Positionserfassungsmittel ermittelten Position des Gegensteckers vorzupositionieren.

3. Ladesystem nach einem der vorhergehenden Ansprüche, **gekennzeichnet durch** ein Speichermittel zum Speichern einer von einem Kraftsensor ermittelten Kraft, ein Auswertemittel zum Auswerten einer von einem Kraftsensor ermittelten Kraft oder ein Speicher- und Auswertemittel (1.1) zum Speichern und Auswerten einer von einem Kraftsensor ermittelten Kraft.

4. Ladesystem nach dem vorhergehenden Anspruch, **dadurch gekennzeichnet, dass**
das Speichermittel, Auswertemittel bzw. Speicher- und Auswertemittel zur Bewertung
- der Steckverbindung;
- einer Verbindungsbahn;
- einer Lösebahn; und/oder
- einer Ladeposition des robotergeführten Steckers;
und/oder
zur Anpassung
- der Steckverbindung;
- einer Verbindungsbahn;
- einer Lösebahn; und/oder
- einer Ladeposition des robotergeführten Steckers eingerichtet ist.

5. Ladesystem nach einem der vorhergehenden Ansprüche, **gekennzeichnet durch** eine Rutschkupplung (7), die zwischen dem Stecker und dem Roboter angeordnet ist.

6. Ladesystem nach einem der vorhergehenden Ansprüche, **dadurch gekennzeichnet, dass** es dazu eingerichtet ist, ein Aufladen des Energiespeichers in Abhängigkeit von einer Freigabe durch das Steuermittel durchzuführen.

7. Ladesystem nach einem der vorhergehenden Ansprüche, **gekennzeichnet durch** einen robotergeführten Greifer zum Öffnen eines Tankdeckels des Fahrzeugs, Schließen eines Tankdeckels des Fahrzeugs oder Öffnen und Schließen eines Tankdeckels des Fahrzeugs.

8. Verfahren zum elektrischen Aufladen eines Kraftfahrzeugs (2) mittels eines Ladesystems nach einem der vorhergehenden Ansprüche, mit den Schritten:
(S30) Ermitteln einer Kraft durch das Krafterfassungsmittel; und
(S30) Steuern des Roboters zum Verbinden des robotergeführten Steckers mit dem Gegenstecker auf Basis der von dem Krafterfassungsmittel ermittelten Kraft, wobei die ermittelte Kraft eine auf den Stecker wirkende Kraft ist und auch beim Lösen der Steckverbindung eine Kraft ermittelt wird.

9. Verfahren nach Anspruch 8, **gekennzeichnet durch** die Schritte:
(S10) Ermitteln einer Position des Gegensteckers durch ein, insbesondere robotergeführtes, Positionserfassungsmittel; und
(S20) Vorpositionieren des robotergeführten Steckers durch das Steuermittel auf Basis einer von dem Positionserfassungsmittel ermittelten Position des Gegensteckers.

10. Verfahren nach Anspruch 8 oder 9, **gekennzeichnet durch** wenigstens einen der Schritte:
(S40) Speichern und Auswerten einer von einem Kraftsensor ermittelten Kraft durch das Speichermittel, Auswertemittel bzw. Speicher- und Auswertemittel.

11. Verfahren nach dem vorhergehenden Anspruch, **gekennzeichnet durch** wenigstens einen der Schritte:
Bewerten
- der Steckverbindung;
- einer Verbindungsbahn;
- einer Lösebahn; und/oder
- einer Ladeposition des robotergeführten Steckers;
und/oder
Anpassen
- der Steckverbindung;
- einer Verbindungsbahn;
- einer Lösebahn; und/oder
- einer Ladeposition des robotergeführten Steckers
durch das Speichermittel, Auswertemittel bzw. Speicher- und Auswertemittel.

12. Verfahren nach einem der Ansprüche 8 bis 11, **dadurch gekennzeichnet, dass** ein Aufladen des Energiespeichers in Abhängigkeit von einer Freigabe durch das Steuermittel durchgeführt wird.

13. Computerprogrammprodukt mit einem Programmcode, der auf einem von einem Computer lesbaren Medium gespeichert ist und Befehle umfasst, die bei der Ausführung des Programms durch den Computer diesen veranlassen, das Verfahren nach einem der Ansprüche 8 bis 12 auszuführen.

## Claims

1. A charging system for electrically charging a motor vehicle, in particular a passenger car (2), wherein the charging system comprises a robot (1) comprising a control means (1.1), a force detection means (5) and a plug (4.1) which is attached to the robot and which is set up to establish a releasable plug-in connection with a mating plug (4.2) of the motor vehicle for charging an electric power storage unit of the motor vehicle, wherein the control means is set up to communicate with the force detection means and to connect the plug guided by the robot to the mating plug on the basis of a force determined by the force detection means, **characterised in that** the force which has been determined is a force acting on the plug, and **in that** the force detection means is set up to determine a force also when the plug-in connection is being released.

2. The charging system as claimed in claim 1, **characterised by** a position detection means (6), in particular a position detection means (6) guided by the robot, for determining a position of the mating plug, wherein the control means is set up to communicate with the position detection means and to pre-position the plug guided by the robot on the basis of a position of the mating plug determined by the position detection means.

3. The charging system as claimed in any one of the preceding claims, **characterised by** a storage means for storing a force determined by a force sensor, an evaluation means for evaluating a force determined by a force sensor or a storage and evaluation means (1.1) for storing and evaluating a force determined by a force sensor.

4. The charging system as claimed in the preceding claim, **characterised in that** the storage means, the evaluation means or the storage and evaluation means is set up for carrying out an evaluation
- of the plug-in connection;
- of a connecting path;
- of a releasing path; and / or
- of a charging position of the plug guided by the robot;
and / or
for carrying out an adaptation
- of the plug-in connection;
- of a connecting path;
- of a releasing path; and / or
- of a charging position of the plug guided by the robot.

5. The charging system as claimed in any one of the preceding claims, **characterised by** a slip clutch (7) which is arranged between the plug and the robot.

6. The charging system as claimed in any one of the preceding claims, **characterised in that** it is set up to carry out a charging process of the power storage unit as a function of a clearance by the control means.

7. The charging system as claimed in any one of the preceding claims, **characterised by** a gripper guided by the robot for opening a fuel tank cap of the vehicle, for closing a fuel tank cap of the vehicle, or opening and closing a fuel tank cap of the vehicle.

8. A method of electrically charging a motor vehicle (2) by means of a charging system as claimed in any one of the preceding claims, wherein the method comprises the steps of:
(S30) determining a force by the force detecting means; and
(S30) controlling the robot to connect the plug guided by the robot to the mating connector on the basis of the force determined by the force detection means, wherein the force which has been determined is a force acting on the plug, and wherein a force is also determined when the plug-in connection is being released.

9. The method as claimed in claim 8, **characterised by** the steps of:
(S10) determining a position of the mating plug by a position detection means, in particular a position detection means guided by the robot; and
(S20) pre-positioning, by the control means, the plug guided by the robot on the basis of a position of the mating plug determined by the position detection means.

10. The method as claimed in claim 8 or 9, **characterised by** at least one of the steps of:
(S40) storing and evaluating, by the storage means, the evaluation means or the storage and evaluation means, a force determined by a force sensor.

11. The method as claimed in the preceding claim, **characterized by** at least one of the steps of:
carrying out an evaluation
- of the plug-in connection;
- of a connecting path;
- of a releasing path; and / or
- of a charging position of the plug guided by the robot;
and / or
carrying out an adaptation
- of the plug-in connection;
- of a connecting path;
- of a releasing path; and / or
- of a charging position of the plug guided by the robot
by the storage means, the evaluation means, or the storage and evaluation means.

12. The method as claimed in any one of claims 8 to 11 **characterised in that** a charging process of the power storage unit is carried out as a function of a clearance by the control means.

13. A computer program product comprising a program code which is stored on a medium readable by a computer and which comprises instructions which, when the program is being executed on the computer, cause the computer to carry out the method as claimed in any one of claims 8 to 12.

## Revendications

1. Système de charge pour la recharge électrique d'un véhicule à moteur, en particulier un véhicule léger (2), avec un robot (1) avec un moyen de commande (1.1), un moyen de détection de force (5) et une fiche (4.1) fixée sur le robot, qui est mise au point pour établir, avec une fiche homologue (4.2) côté véhicule, une connexion enfichable amovible pour recharger un accumulateur d'énergie électrique d'un véhicule à moteur,
dans lequel le moyen de commande est mis au point pour communiquer avec le moyen de détection de forme et pour relier à la fiche homologue la fiche guidée par robot sur la base d'une force déterminée par le moyen de détection de force,
**caractérisé en ce que** la force déterminée est une force agissant sur la fiche et le moyen de détection de force est mis au point pour déterminer une force également lors du desserrage de la connexion enfichable.

2. Système de charge selon la revendication 1, **caractérisé par** un moyen de détection de position (6), en particulier guidé par robot, pour déterminer une position de la fiche homologue, dans lequel le moyen de commande est mis au point pour communiquer avec le moyen de détection de position et pour positionner au préalable la fiche guidée par robot sur la base d'une position, déterminée par le moyen de détection de position, de la fiche homologue.

3. Système de charge selon l'une quelconque des revendications précédentes, **caractérisé par** un moyen de stockage pour stocker une force déterminer par un capteur de force, un moyen d'évaluation pour évaluer une force déterminée par un capteur de force ou un moyen de stockage et d'évaluation (1.1) pour stocker et évaluer une force déterminée par un capteur de force.

4. Système de charge selon la revendication précédente, **caractérisé en ce que** le moyen de stockage, le moyen d'évaluation ou le moyen de stockage et d'évaluation sont mis au point
pour évaluer
- la connexion enfichable ;
- une bande de liaison ;
- une bande de desserrage ; et/ou
- une position de charge de la fiche guidée par robot ;
et/ou
pour adapter
- la connexion enfichable ;
- une bande de liaison ;
- une bande de desserrage ; et/ou
- une position de charge de la fiche guidée par robot.

5. Système de charge selon l'une quelconque des revendications précédentes, **caractérisé par** un accouplement à friction (7), qui est disposé entre la fiche et le robot.

6. Système de charge selon l'une quelconque des revendications précédentes, **caractérisé en ce qu'**il est mis au point pour mettre en œuvre une recharge de l'accumulateur d'énergie en fonction d'une validation par le moyen de commande.

7. Système de charge selon l'une quelconque des revendications précédentes, **caractérisé par** un grappin guidé par un robot pour ouvrir un couvercle de réservoir du véhicule, fermer un couvercle de réservoir du véhicule ou ouvrir et fermer un couvercle de réservoir du véhicule.

8. Procédé de recharge électrique d'un véhicule à moteur (2) au moyen d'un système de charge selon l'une quelconque des revendications précédentes, avec les étapes :
(S30) de détermination d'une force par le moyen de détection de force ; et
(S30) de commande du robot pour relier la fiche guidée par robot à une fiche homologue sur la base de la force déterminée par le moyen de détection de force,
dans lequel la force déterminée est une force agissant sur la fiche et une force est déterminée également lors du desserrage de la connexion enfichable.

9. Procédé selon la revendication 8, **caractérisé par** les étapes :
(S10) de détermination d'une position de la fiche homologue par un moyen de détection de position en particulier guidé par un robot ; et
(S20) de positionnement préalable de la fiche guidée par robot par le moyen de commande sur la base d'une position, déterminée par le moyen de détection de position, de la fiche homologue.

10. Procédé selon la revendication 8 ou 9, **caractérisé par** au moins une des étapes :
(S40) de stockage et d'évaluation d'une force déterminée par un capteur de force par le moyen de stockage, le moyen d'analyse ou le moyen de stockage et d'évaluation.

11. Procédé selon la revendication précédente, **caractérisé par** au moins une des étapes :
d'évaluation
- de la connexion enfichable ;
- d'une voie de liaison ;
- d'une voie de desserrage ; et/ou
- d'une position de charge de la fiche guidée par robot ;
et/ou
d'adaptation
- de la connexion enfichable ;
- d'une voie de liaison ;
- d'une voie de desserrage ; et/ou
- d'une position de charge de la fiche guidée par robot ;
par le moyen de stockage, le moyen d'évaluation ou le moyen de stockage et d'évaluation.

12. Procédé selon l'une quelconque des revendications 8 à 11, **caractérisé en ce qu'**une recharge de l'accumulateur d'énergie est mise en œuvre en fonction d'une validation par le moyen de commande.

13. Produit-programme d'ordinateur avec un code de programme, qui est stocké sur un support lisible par ordinateur et comprend des instructions, qui déclenchent, lors de l'exécution du programme par l'ordinateur, l'exécution du procédé selon l'une quelconque des revendications 8 à 12.
